# EUROPEAN PATENT SPECIFICATION

(11) **EP 2 632 026 B1**
(45) Date of publication and mention of the grant of the patent: **10.01.2018**
(21) Application number: 13169144.6
(22) Date of filing: 14.07.2009
(51) Int. Cl.: H02K 1/27, H02K 21/24, H02K 9/19

(54) **Cooling jacket for axial flux machine**
Kühlmantel für Axialströmungsmaschine
Chemise de refroidissement pour machine à flux axial

(30) Priority: 16.07.2008 GB 0813032; 08.05.2009 GB 0907982
(43) Date of publication of application: 28.08.2013
(62) Divisional of application: 09784734.7
(73) Proprietor: Cummins Generator Technologies Limited, Stamford, Lincolnshire PE9 2NB (GB)
(72) Inventor: Mebarki, Abdelslam, Stamford, Lincolnshire PE9 1AW (GB); Saini, Gurpreet, Peterborough, Cambridge PE1 4SB (GB); Thiagarajan Gopinath, Thelungupalayam, Stamford, Lincolshire PE9 1LF (GB); Shanel, Martin, Deeping St James, Peterborough PE6 8QA (GB); Bell, Adrian, Oakham, Rutland LE15 7DJ (GB); Gray, Richard, Sleaford, Lincolnshire NG34 0LD (GB); Brown, Neil, Holbeach, Lincolnshire PE12 8PB (GB)
(74) Representative: Williams, Michael Ian

(56) References cited:
- WO-A-94/22204
- WO-A2-02/089292
- DE-A1-102005 052 783
- DE-C1- 19 854 465
- JP-A- 2004 312 886
- JP-A- 2008 109 817
- JP-U- 3 040 865
- US-A1- 2004 195 932

## Description

The present invention relates to techniques for cooling the stator in an axial flux rotating electrical machine, such as a generator or motor.

Axial flux rotating electrical machines differ from conventional radial flux machines in that the magnetic flux between the rotor and the stator runs parallel to the mechanical shaft. Axial flux machines can have several advantages over radial flux machines, including compact machine construction, high power density, and a more robust structure. However various problems remain to be addressed, including cooling of the machine.

It may be desirable to produce an axial flux machine as an enclosed unit. Enclosed machines have various advantages, including reduced susceptibility to contamination. However, enclosed machines have reduced air cooling, and thus alternative cooling solutions may need to be provided. In particular, cooling of stator windings has proved problematic.

WO 94/22204 discloses an axial flux machine comprising a pair of separate lamination cores located on either side of a heat sink. The heat sink is formed from two octagonal plates with copper tubing sandwiched between them.

JP 3-40865 U discloses a cooling jacket inside the stator of an axial flux machine. Ribs are provided in the cooling jacket to direct the flow of coolant.

DE 10 2005 052 783 A1 discloses a radial flux electrical machine comprising a stator constructed from a plurality of stacked and interconnected sheet metal layers. The stator may have at least one meandering channel through which a fluid may flow to cool the stator. The meandering channel may cause turbulence to be exhibited.

JP 2008-109817 discloses a radial flux motor with concentrated windings. A cooling passage is provided circumferentially in a motor case holding the stator core. The cooling passage is formed such that the cooling efficiency is higher in a position where a coil is provided. This is achieved by narrowing the cooling passage in positions adjacent to the coils. The faster flow of coolant through the narrow parts of the passage provides greater cooling in these areas, and introduces turbulence into the flow of coolant.

According to a first aspect of the present invention there is provided a cooling jacket for a stator of an axial flux rotating electrical machine as defined in claim 1.

According to a second aspect of the present invention there is provided a method of cooling the stator of an axial flux rotating electrical machine as defined in claim 14. Preferred features of the present invention are recited in the dependent claims.

By providing grooves which introduce turbulence into the flow of coolant, the transfer of heat from the stator to the coolant may be improved. Furthermore, it has been found that the use of grooves can allow turbulence to be introduced while causing a relatively low pressure drop in the coolant, compared to the case where for example protrusions are provided in the passage. The grooves are arranged such that a similar level of heat transfer is achieved throughout the cooling jacket. This may help to ensure uniform cooling of the stator, which may allow the machine to operate more efficiently and/or at a higher rating. According to the invention, grooves running substantially parallel to the flow of coolant are provided in a first part of the cooling jacket (with regard to the flow of coolant), and grooves running substantially perpendicular to the flow of coolant are provided in a second part of the cooling jacket.

The cooling jacket is preferably hollow to provide the passage through which the coolant flows. In one embodiment, the cooling jacket is formed from two sections which, when pressed together, form an annular cavity. In this case the two sections may be sealed by at least one O-ring seal, and preferably two O-ring seals. The two sections may be at least partially held together by stator windings. This can allow the two sections to be joined together without the need for welding, which may reduce the manufacturing cost.

The cooling jacket may comprise a plurality of fins which extend beyond the circumference of the stator. The fins may conduct heat away from the stator windings and towards, for example, a coolant in the centre of the cooling jacket. Thus the fins may act as a heat sink for stator windings. This arrangement can thus help to cool the stator effectively.

The fins may be, for example, semi-cylindrical or any other suitable shape, and may lie on a ring around the outside of the cooling jacket. Preferably the fins define slots which accommodate stator windings. This may create a relatively large contact area between the windings and the fins, which may assist in cooling the windings.

Stators for axial flux machines may have overhang windings running around their outside circumference. Preferably the fins extend outwards radially such that, when the stator is wound, overhang windings rest on the fins. This may be achieved by ensuring that the stator windings are completely accommodated in the slots between the fins. In this way the fins may act as a heat sink for the overhang windings.

In order to cool windings on the inside of the stator, the cooling jacket may further comprise a plurality of fins which extend radially inward of the stator.

In an axial flux rotating electrical machine it is necessary to provide some means for holding the stator in place. Previously considered arrangements for holding the stator have involved the use of two retention ring components which are brought together around the stator. The retention ring components have teeth which clamp the stator in place. However, various problems have been identified with such arrangements. Firstly, the use of two retention rings requires two castings and multiple machined surfaces which increases the production cost of the machine. Secondly, the teeth which clamp the stator may experience eddy current losses as they are in the main magnetic field of the machine. Thirdly, when assembling the stator the retention ring may damage the stator end windings since it is in close contact with the stator. Fourthly, under short circuit conditions, the stator may rotate within the retention ring, damaging the windings.

In one embodiment of the invention, rather than clamping the stator in place, the cooling jacket is used to secure the stator assembly. A convenient way to do this may be to use some of the fins on the cooling jacket. Thus, at least some of the fins may be arranged for securing the stator to the machine. Such an arrangement may help to reduce eddy current losses due to the main rotor field, since it avoids the need for a clamp to have direct contact with the stator.

Preferably some of the fins extend outwards in a radial direction by a greater amount than the other fins. The extended fins may then be used for securing the cooling jacket to the machine. The extended fins may have holes for securing the cooling jacket to the machine. For example, the extended fins may be used to bolt, rivet or screw the cooling jacket to the machine. Thus a positive retention method, rather than clamping, may be used to retain the stator assembly, which may help to prevent stator rotation.

By providing a plurality of independent protrusions which extend radially outwards through the stator windings and which secure the stator to the machine, the stator assembly may be secured to the machine without the need for direct contact with the stator, which may help to reduce eddy current losses. Furthermore, a positive retention method is provided, which may help to prevent stator rotation. In addition, the stator windings can easily be wound on to the stator and cooling jacket, by locating the windings between the protrusions.

The protrusions may have holes for securing the cooling jacket to the machine. For example, the protrusions may be used to bolt, rivet or screw the cooling jacket to the machine. The protrusions may be in the form of the extended fins described above, or in some other form. The cooling jacket need not include the other fins described above.

The stator and/or cooling jacket may comprise open slots for accommodating the stator windings. This may facilitate winding of the stator windings.

The stator assembly may further comprise roll pins inserted between the cooling jacket and the stator. This may help to reduce the risk of stator rotation.

The machine may further comprise a retention ring, and the cooling jacket may be secured to the retention ring. The retention ring may be secured to the machine, or it may be integrated with the machine, for example, as part of a machine housing.

The retention ring may comprise a plurality of teeth aligned with the protrusions on the cooling jacket. This can allow the stator assembly to be held using a single retention ring, rather than being clamped between two retention rings, which may reduce the cost and complexity of the machine. Since the retention ring is fixed to the cooling jacket, rather than clamping the stator, the retention ring is not in the machine's main magnetic field. Thus this arrangement may help to reduce eddy current losses. Furthermore, since the retention ring is fixed to the cooling jacket rather than the stator, the risk of damaging the stator windings is reduced.

The machine may further comprise a machine housing, and the stator may be enclosed within and/or secured to the machine housing. The retention ring may be integrated with the machine housing, or some other form of mounting may be provided in the housing. By forming the retention features as an integrated part of the housing for the electrical machine, the ease of assembly may be improved and the part count and cost of manufacture may be reduced.

The machine may further comprise an inlet pipe and an outlet pipe for supplying coolant to and from the cooling jacket, and the inlet pipe and outlet pipe may be integrated with the machine housing. This may facilitate the supply of coolant to the cooling jacket, reduce the number of components, and simplify manufacture of the machine.

Where the axial flux machine is to be connected to or integrated with an engine, then it may be possible for the cooling jacket to be integrated with the engine's cooling system, so that the coolant which cools the engine is also passed through the cooling jacket to cool the axial flux machine. Thus the cooling jacket may be arranged to be connected to an engine cooling system. This can allow a single cooling system to be provided for both the engine and the machine, which may reduce the number of components, and help to provide a compact unit.

As discussed above, it may be desirable to produce an axial flux machine as an enclosed unit. If the axial flux machine is to be connected to an engine in order to operate as a generator set, then a further level of integration can be achieved by producing the engine and the machine as an enclosed unit. For example, the axial flux machine may replace the engine flywheel, and may sit inside the flywheel housing. This can reduce the number of components, and provide a highly compact unit.

Thus the engine may have a flywheel housing, and the electrical machine may be integrated in the engine flywheel housing.

According to another aspect of the invention there is provided an axial flux rotating electrical machine comprising a cooling jacket as described above.

Features of one aspect of the invention may be provided with any other aspect. Any of the apparatus features may be provided as method features and *vice versa.*

Preferred features of the present invention will now be described, purely by way of example, with reference to the accompanying drawings, in which:
Figure 1 shows parts of an axial flux rotating electrical machine;
Figures 2A to 2C show parts of a stator and cooling jacket;
Figures 3A to 3E show parts of a cooling jacket;
Figures 4A to 4C show an embodiment of a cooling jacket;
Figures 5A to 5D show parts of a stator retention assembly;
Figures 6 and 7 show embodiments of a machine with inlet and outlet pipes integrated in the machine housing; and
Figure 8 shows an embodiment of a machine with a stator retention ring integrated with the machine housing.

### Overview

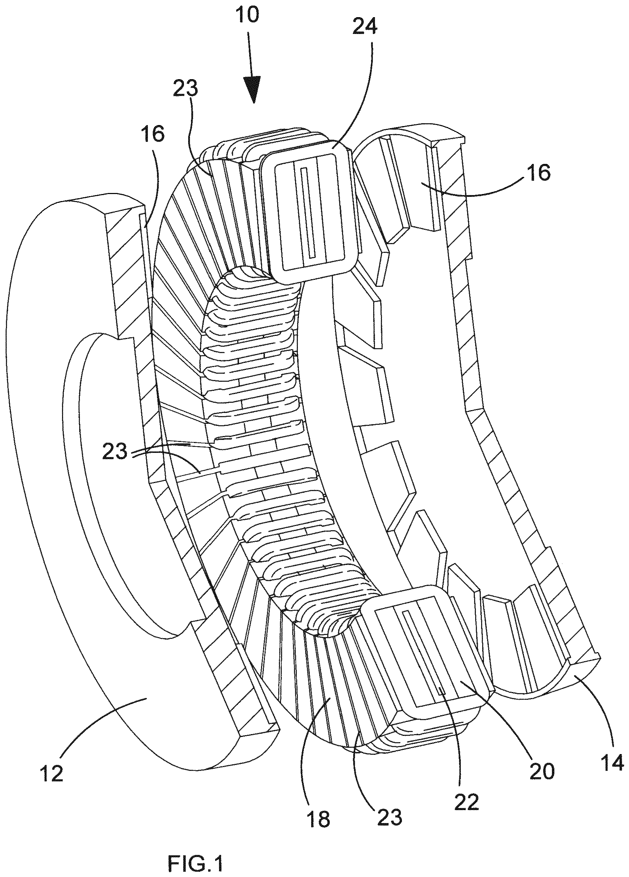

Figure 1 shows parts of an axial flux rotating electrical machine. Referring to Figure 1, the machine comprises a stator 10 sandwiched between two rotor discs 12, 14. The stator 10 consists of two slotted laminated toroids 18, 20 with a cooling jacket 22 sandwiched between the two. The two stator toroids 18, 20 may be manufactured by rolling a single strip of magnetic steel sheet. Slots 23 are formed on one side by an indexed punching machine as the rolling process takes place. Stator windings 24 are wound in the slots in the finished stator.

The rotor discs 12, 14 are mounted on a common shaft, and may be entirely ferromagnetic. Each disc carries a set of permanent magnets 16 with alternate north and south poles directed axially toward the stator. The rotor does not carry alternating flux and it can be constructed conveniently from cast iron. The permanent magnets 16 are preferably sintered Neodymium-Iron-Boron, providing a high magnetic loading, leading to a compact machine design.

The axial machine may be operated either as a generator or as a motor, or both.

### Stator cooling

Referring to Figure 1, it can be seen that the stator 10 is at the centre of the machine, and therefore is likely to experience the highest temperatures. In the arrangement of Figure 1, a cooling jacket 22 is provided in order to cool the stator.

In the arrangement of Figure 1, the stator 10 is formed from two parts 18, 20 with the cooling jacket 22 sandwiched between the two. The cooling jacket is disc-shaped, and is hollow to allow a cooling fluid to be circulated through it. Inlet and outlet pipes (not shown in Figure 1) are provided to allow the cooling fluid to enter and exit the cooling jacket. Any type of cooling fluid may be used, such as engine coolant. The cooling jacket 22 is manufactured from a strong, non-magnetic, heat-conducting material such as aluminium. In one embodiment the cooling jacket is formed from two discs of aluminium which are welded together.

The cooling jacket 22 cools the machine at what is otherwise likely to be the hottest part, namely the centre of the machine. As a consequence it may be possible to rely on the cooling jacket to cool the whole machine. In this case, the machine may be manufactured as a totally enclosed unit.

Conventional rotating electrical machines suffer from the problem that contaminants such as sand and salt may enter the machine, reducing the machine's durability. With permanent magnet machines, the problem of contamination is even more serious, because contaminants can react with the magnets, causing them to rust and deteriorate. A totally enclosed unit has the advantage of being less susceptible to contamination, which may increase the machine's durability. A totally enclosed machine may also be packaged more effectively, as no allowance need be made for air cooling. Furthermore, a totally enclosed unit may be safer, as total containment of rotating components is possible. In addition, a totally enclosed unit may emit less electromagnetic interference, saving the expense of EMI screening.

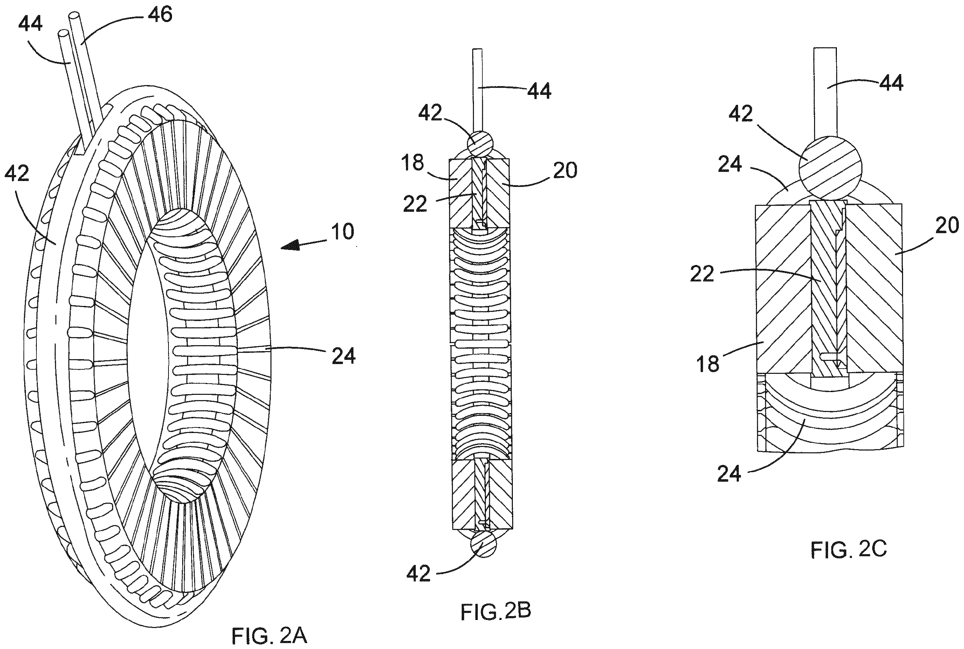

Figures 2A to 2C show parts of the stator 10 and cooling jacket 22 in more detail. Figure 2A shows the stator 10 with windings 24 in place. Overhang windings 42 are located around the circumference of the stator. An inlet pipe 44 and outlet pipe 46 take coolant into and out of the cooling jacket in the centre of the stator.

Figure 2B shows a cross sectional view of the stator. The stator is formed of two slotted ring-shaped discs 18, 20 with the cooling jacket 22 sandwiched between the two. Figure 2C shows the contact surface of the cooling jacket 22 with the stator in more detail. It can be seen that there is only minimal contact between the overhang windings 42 and the cooling jacket 22. This may mean that the overhang windings may not be cooled effectively, which may reduce the efficiency of the machine.

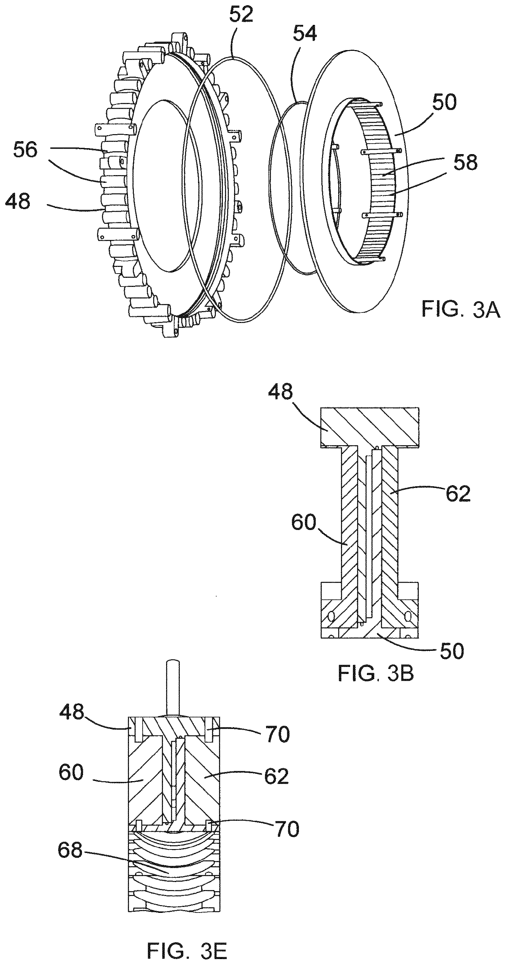

Another embodiment of the cooling jacket is shown in Figures 3A-3E. The cooling jacket of Figures 3A-3E is designed to be more effective in cooling the machine.

Figure 3A shows an exploded view of the cooling jacket. Referring to Figure 3A, the cooling jacket is formed from two sections 48, 50 which, when pressed together, form an annular cavity in their centre. Each of the two sections 48, 50 has two circular grooves which accommodate O-rings 52, 54. The O-rings seal the two sections 48, 50, so that coolant flowing in the cavity will not leak out.

The first section 48 of the cooling jacket carries a plurality of heat sink fins 56 around its circumference. The fins 56 are in the form of axially-running semi-cylinders on a ring around the outside surface of the first section. The space between the fins is designed to accommodate the stator windings. The outside surface of the cooling jacket between the fins is curved to fit with the curvature of the windings. Every sixth fin is longer than the others in an axial direction, and has a hole at each end.

The second section 50 of the cooling jacket has similar, but smaller, fins 58 around its inside edge. The fins 58 are in the form of axially-running semi-cylinders around the inside surface of the first section. The spaces between the fins 58 are designed to accommodate the inside of the stator windings, and the inside surface between the fins is curved to fit with the curvature of the windings. Some of the fins 58 are extended, and have bolt holes through the extended portions.

Thus, the assembled cooling jacket has an essentially annular shape, with axially running fins on both the inside and outside surfaces, and curved surfaces between the fins.

Figure 3B shows a cross sectional view of part of the assembled cooling jacket in place inside the stator. The cross section of Figure 3B is taken through the extended fins. The two sections 48, 50 of the cooling jacket are pushed together between two stator sections 60, 62. The bolt holes in the extended fins on the second section may be used to help secure the cooling jacket to the stator.

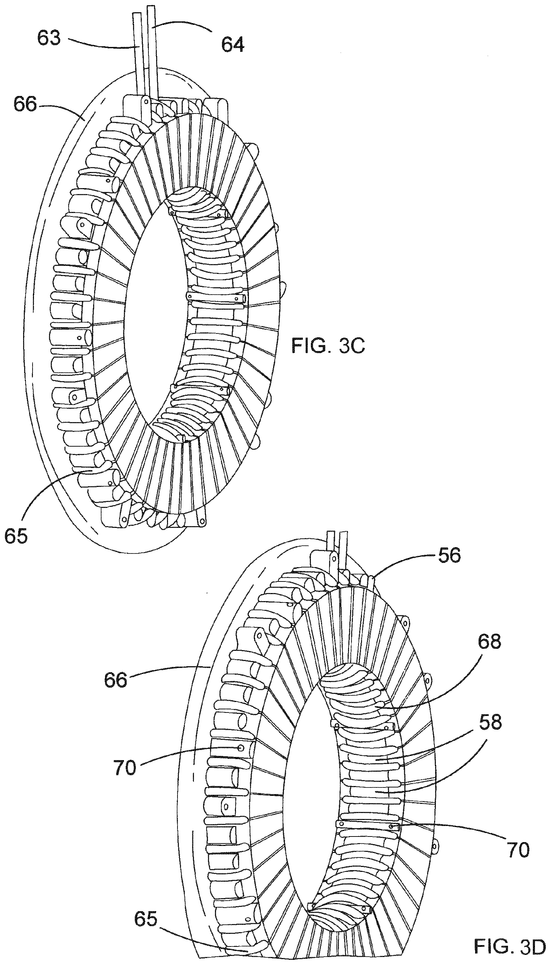

Figure 3C shows the stator with windings 65 and overhang windings 66 in place. The windings sit on the curved surfaces between the fins on both the inside and outside of the cooling jacket. The windings help to hold the stator and cooling jacket together. An inlet pipe 63 and outlet pipe 64 take coolant into and out of the cooling jacket.

Figure 3D shows a more detailed view of the stator assembly. It can be seen that the windings 65 slot into the grooves between the fins 56, while the overhang windings 66 lie on top of the fins 56. Thus the fins 56 have a relatively large contact area with the windings 65, 66. The fins 56 act as a heat sink feature, and conduct heat away from the windings towards the coolant in the cooling jacket. The inside windings 68 slot into the grooves between the inside fins 58, and thus the inside fins conduct heat away from the inside windings.

In order to prevent rotation of the stator, roll pins 70 are inserted through the holes in the longer fins into the stator. Figure 3E shows a cross sectional view of the stator with the roll pins 70 in place.

The modified cooling jacket shown in Figures 3A-3E may provide better cooling due to the extension of the inner and outer diameter of the cooling jacket. The cooling jacket has a larger contact area with the windings, which increases cooling efficiency. The production method may be cheaper, since most of the features can be cast which avoids the expense of machining. Furthermore, the two sections of the cooling jacket can be joined together without the need for welding. The cooling jacket is preferably made from a strong, non-magnetic, heat conducting material such as aluminium.

The axial flux machine described above may be connected to an engine in order to be driven as a generator. In this case, the cooling jacket may be connected to the engine's cooling system, so that the engine's coolant is also passed through the cooling jacket. This can remove the need to provide a separate cooling system (pump, radiator etc.) for the cooling jacket.

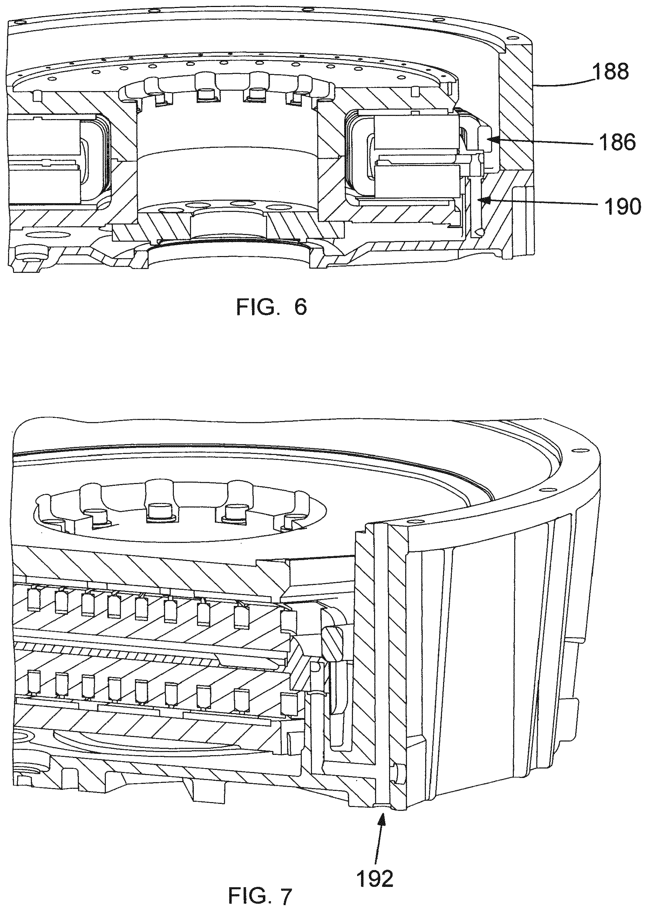

Figure 6 shows another embodiment, in which the inlet and outlet pipes are integrated with the heatsink and the machine housing. Referring to Figure 6, the stator 186 is shown in place inside the machine housing 188. An inlet pipe 190 is provided inside the machine for taking coolant into the stator cooling jacket. A similar outlet pipe is also provided for taking coolant out of the stator cooling jacket. This arrangement can allow the total number of components to be reduced, and assembly of the machine to be simplified.

Figure 7 shows another embodiment with integrated inlet and outlet pipes. Referring to Figure 7, a coolant path 192 is provided as part of the heatsink and machine housing, which can facilitate the supply of coolant from outside of the machine to and from the cooling jacket.

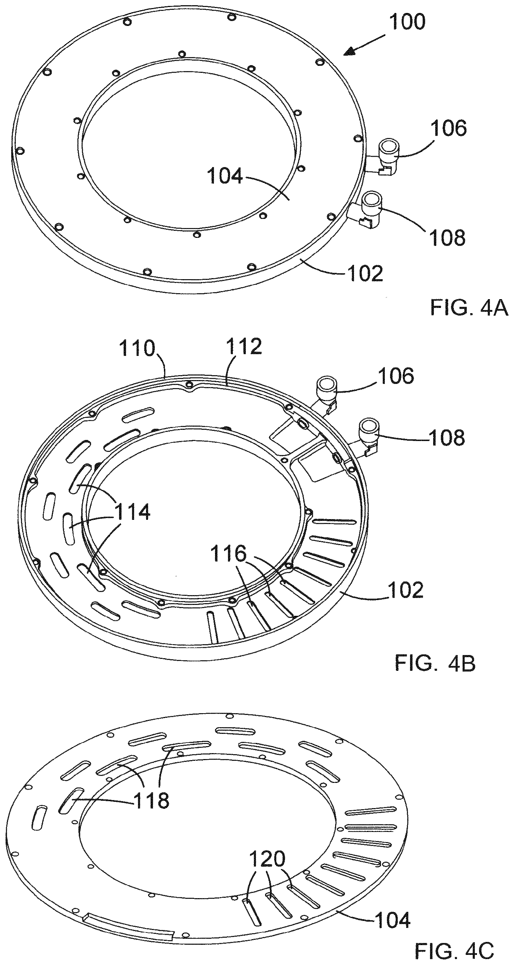

Figures 4A-4C show parts of the cooling jacket. The cooling jacket of Figures 4A-4C is designed to provide a more uniform transfer of heat from the stator core, while maintaining a low pressure drop in the coolant.

Figure 4A is an external view of the cooling jacket 100. The cooling jacket is formed from a rear plate 102 and a front plate 104 which, when connected together, form a passage with a high aspect-ratio cross-section. An inlet pipe 106 takes coolant into the passage, and an outlet pipe 108 takes coolant out of the passage. The coolant runs in an anti-clockwise direction through the cooling jacket passage.

Figure 4B shows the rear plate 102 without the front plate. The rear plate 102 has a projecting rim 110 around its circumference which is designed to accommodate the front plate 104. A lip 112 creates a gap between the front plate 104 and the inside surface of the rear plate 102, in order to form the passage for the coolant. The inside surface of the rear plate 102 has a first series of milled grooves 114 and a second series of milled grooves 116. The grooves 114 run parallel to the flow of coolant, while the grooves 116 run perpendicular to the flow of coolant.

Figure 4C shows the inside surface of the front plate 104. Thus the view of Figure 4C is from the opposite side of the front plate to that of Figure 4A. The front plate 104 is designed to fit inside the rim 110 and on top of the lip 112 of the rear plate 102. The inside surface of the front plate 104 has a first series of milled grooves 118 and a second series of milled grooves 120. The grooves 118 run parallel to the flow of coolant, while the grooves 120 run perpendicular to the flow of coolant.

In the cooling jacket of Figures 4A-4C, the grooves 114, 116, 118, 120 introduce turbulence in the flow of coolant through the passage. A different amount of turbulence is introduced by different grooves in different parts of the passage in order to maintain a similar level of heat transfer along the trajectory of the coolant.

Early after entry of the coolant into the passage, turbulence is high and no augmentation of the turbulence is needed. Between approximately 20-60% of the distance travelled by the coolant around the passage, moderate augmentation is achieved by the first series of milled grooves 114, 118, which are parallel with the flow of coolant. From 70-90% of the distance travelled by the coolant, a higher level of flow disturbance is required and is achieved by the series of cross-flow milled grooves 116, 120. The last 10% of the distance travelled by the coolant sees a drop in heat transfer rate from wall to coolant, but this is compensated by high conductivity of the cooling jacket material (aluminium) to transfer heat from the water outlet region to the water inlet region.

In Figures 4B and 4C, the depth of grooves is approximately equal to half of the width of the passage. The use of grooves has been found to be superior in terms of resulting pressure drop across passage, compared to the use of ribs. Similar heat transfer improvement may be achieved with grooves as would be with ribs. The mutual positions of the grooves can be arrived at by considering the distance it takes for an effect of each new thermal boundary layer to diminish. The arrangement shown in Figures 4A-4C has been designed for a flow rate in the range of 5 to 20 litres per minute.

The milled grooves shown in Figures 4A-4C are also provided with the cooling jacket of Figures 2A-2C and 3A-3E.

### Stator retention

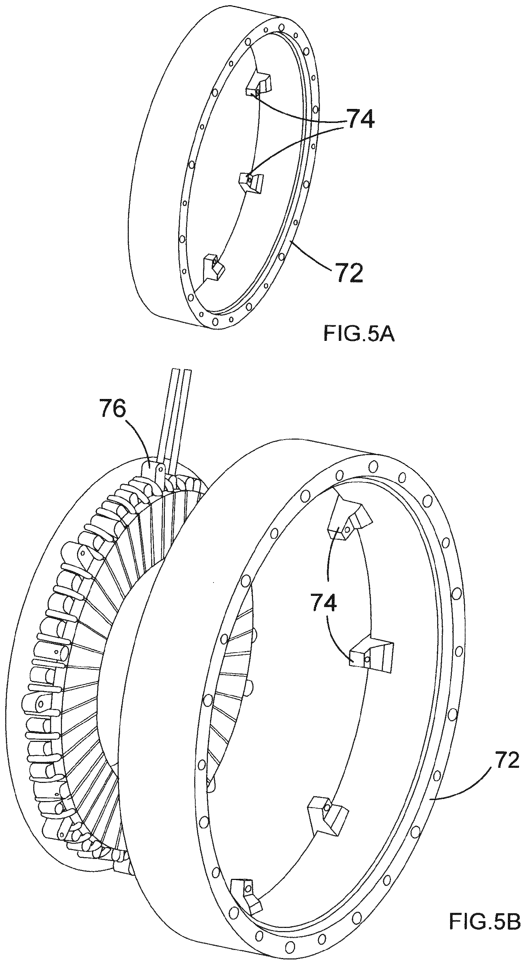

Referring back to the schematic diagram of an axial flux machine in Figure 1, it can be seen that some arrangement is need to hold the stator 10 in place. Figures 5A-5D show parts of a stator retention assembly.

Figure 5A shows a retaining ring which may be used to retain a stator assembly. The retaining ring has a plurality of teeth 74 extending radially inwards on one edge.

Figure 5B shows an exploded view of the stator assembly and the retaining ring. The stator assembly is formed from a cooling jacket sandwiched between two stator sections, as discussed above with reference to Figures 4A-4E. As can be seen from Figure 5B, some of the fins on the outside part of the cooling jacket extend outwards in a radial direction next to the overhang windings. The teeth 74 of the retaining ring 72 are designed to engage with the extended fins 76.

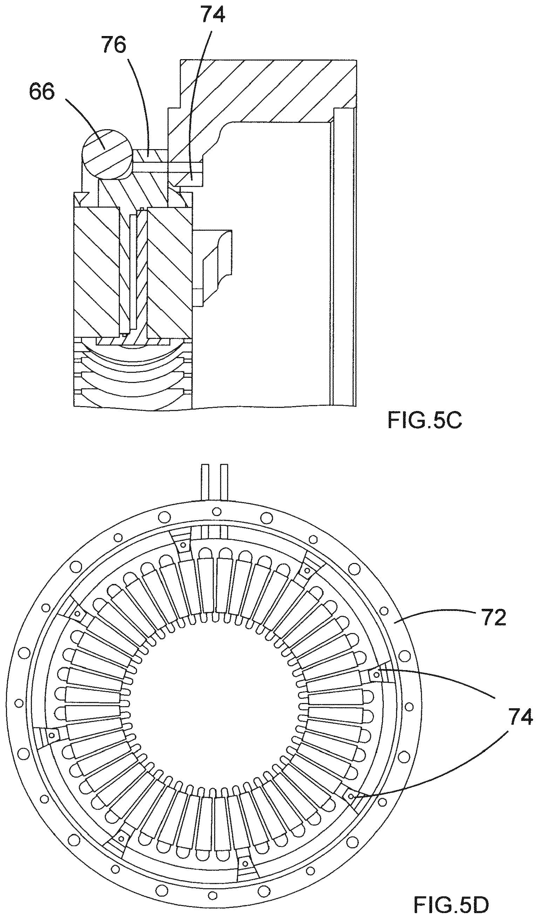

Figure 5C is a cross sectional view of the stator assembly in place on the retaining ring. As can be seen from Figure 5C, holes in the retaining ring teeth 74 are aligned with holes in the extended fins 76. This allows the stator assembly to be bolted to the retaining ring. An end view of the assembled stator and retaining ring is shown in Figure 5D.

In the stator retention assembly shown in Figures 5A-5D, the stator assembly is held in place by bolting the cooling jacket to the retention ring, rather than clamping the stator. This means that the retaining ring is not in the main magnetic field, which reduces eddy current losses. Furthermore, by bolting the stator assembly rather than clamping it, the risk of stator rotation under short circuit conditions is reduced. Roll pins are inserted between the cooling jacket and stator as shown in Figure 4E, to further reduce the risk of stator rotation. Since the retention ring is not in direct contact with the stator, the risk of damaging the stator end windings is reduced. Furthermore, the retention assembly shown in Figures 5A-5D is easier to assemble than the previously considered techniques, and uses fewer components.

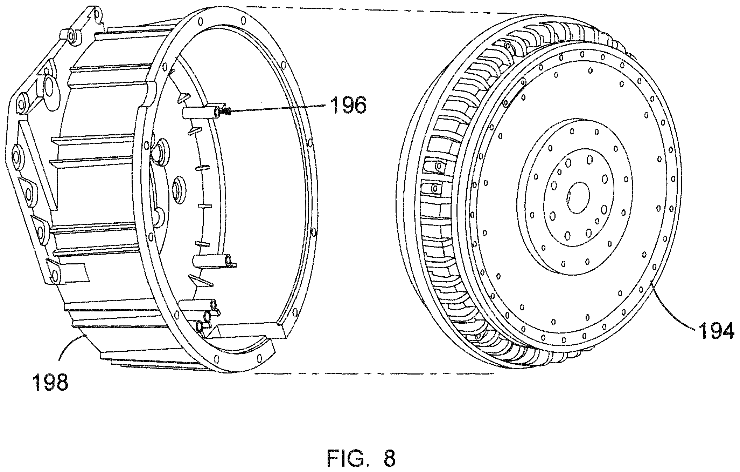

Figure 8 shows another embodiment in which the stator retention ring is integrated with the machine housing. In this embodiment, the stator assembly 194 is retained by bolting the cooling jacket directly to mountings 196 in the machine housing 198. This reduces the number of parts and facilitates manufacture of the machine.

In the embodiments of Figures 3A-3D, 5A-5D and 8, the cooling jacket is shown with both extended fins and non-extended fins. However in other embodiments only the extended fins are provided, and the non-extended fins are omitted. In these embodiments the extended fins are used to secure the stator assembly.

## Claims

1. A cooling jacket (22) for a stator (10) of an axial flux rotating electrical machine, the cooling jacket (22) being arranged to cool the inside of the stator (10), the cooling jacket comprising a passage for the flow of coolant,
**characterised in that**:
the cooling passage comprises grooves (114, 116, 118, 120) which introduce turbulence into the flow of coolant; and
the grooves (114, 116, 118, 120) are arranged to introduce different amounts of turbulence in different parts of the passage, wherein grooves (114, 118) running substantially parallel to the flow of coolant are provided in a first part of the cooling jacket, and grooves (116, 120) running substantially perpendicular to the flow of coolant are provided in a second part of the cooling jacket, such that an increasing amount of turbulence is introduced through the cooling passage in the direction of coolant flow.

2. A cooling jacket according to claim 1, wherein the grooves (114, 116, 118, 120) are arranged such that a similar level of heat transfer is achieved throughout the cooling jacket.

3. A cooling jacket according to claim 1 or 2, wherein some grooves run at different angles to the flow of coolant from other grooves.

4. A cooling jacket according to any of the preceding claims, wherein some grooves are more closely spaced than others.

5. A cooling jacket according to any of the preceding claims, wherein the cooling jacket is disc-shaped.

6. A cooling jacket according to any of the preceding claims, wherein the cooling jacket is formed from two sections (48, 50) which, when pressed together, form an annular cavity.

7. A cooling jacket according to claim 6, wherein the two sections (48, 50) are sealed by at least one O-ring seal.

8. A cooling jacket according to claim 6 or 7, wherein the two sections (48, 50) are at least partially held together by stator windings.

9. A cooling jacket according to any of the preceding claims, further comprising a plurality of fins (56, 76) which extend beyond the circumference of the stator.

10. A cooling jacket according to claim 9, wherein the fins (56, 76) act as heat sinks for stator windings (24) and/or define slots which accommodate stator windings.

11. An axial flux rotating electrical machine comprising:
a stator (10); and
a cooling jacket (22) according to any of the preceding claims inside the stator (10).

12. An axial flux machine according to claim 11, wherein the stator is formed from two parts (18, 20) and the cooling jacket (22) is sandwiched between the two.

13. An axial flux rotating electrical machine according to claim 12, further comprising:
a machine housing (118); and
an inlet pipe (190) and an outlet pipe for supplying coolant to and from the cooling jacket,
wherein the inlet pipe and outlet pipe are integrated with the machine housing.

14. A method of cooling the stator (10) of an axial flux rotating electrical machine, the method comprising:
circulating a coolant through a cooling jacket (22) inside the stator, the cooling jacket comprising a passage for the flow of coolant,
**characterised in that**:
the passage comprises grooves (114, 116, 118, 120) which introduce turbulence into the flow of coolant; and
the grooves (114, 116, 118, 120) introduce different amounts of turbulence in different parts of the passage, wherein grooves (114, 118) running substantially parallel to the flow of coolant are provided in a first part of the cooling jacket, and grooves (116, 120) running substantially perpendicular to the flow of coolant are provided in a second part of the cooling jacket, such that an increasing amount of turbulence is introduced through the cooling passage in the direction of coolant flow.

## Patentansprüche

1. Ein Kühlmantel (22) für einen Stator (10) einer Axialfluss-rotierenden-elektrischen-Maschine, wobei der Kühlmantel (22) eingerichtet ist, um das Innere des Stators (10) zu kühlen, wobei der Kühlmantel einen Durchgang für den Fluss an Kühlmittel umfasst,
**dadurch gekennzeichnet, dass**:
der Kühldurchgang Nuten (114, 116, 118, 120) umfasst, welche Turbulenzen in den Fluss an Kühlmittel einführen; und
die Nuten (114, 116, 118, 120) angeordnet sind, um verschiedene Mengen an Turbulenz in verschiedenen Teilen des Durchgangs einzuführen, wobei Nuten (114, 118), die im Wesentlichen parallel zu dem Fluss an Kühlmittel verlaufen, in einem ersten Teil des Kühlmantels vorgesehen sind, und Nuten (116, 120), die im Wesentlichen senkrecht zu dem Fluss an Kühlmittel verlaufen, in einem zweiten Teil des Kühlmantels vorgesehen sind, sodass eine steigende Menge an Turbulenz durch den Kühldurchgang in Richtung des Kühlmittelflusses eingeführt wird.

2. Ein Kühlmantel gemäß Anspruch 1, wobei die Nuten (114, 116, 118, 120) so angeordnet sind, dass ein ähnliches Niveau an Wärmetransport über den gesamten Kühlmantel erreicht wird.

3. Ein Kühlmantel gemäß Anspruch 1 oder 2, wobei einige Nuten unter verschiedenen Winkeln zu dem Fluss an Kühlmittel von anderen Nuten verlaufen.

4. Ein Kühlmantel gemäß einem der vorherigen Ansprüche, wobei einige Nuten näher beabstandet sind als andere.

5. Ein Kühlmantel gemäß einem der vorherigen Ansprüche, wobei der Kühlmantel scheibenförmig ist.

6. Ein Kühlmantel gemäß einem der vorherigen Ansprüche, wobei der Kühlmantel aus zwei Sektionen (48, 50) gebildet ist, welche, wenn sie zusammengepresst sind, einen ringförmigen Hohlraum bilden.

7. Ein Kühlmantel gemäß Anspruch 6, wobei die zwei Sektionen (48, 50) durch wenigstens einen O-Ring abgedichtet sind.

8. Ein Kühlmantel gemäß Anspruch 6 oder 7, wobei die zwei Sektionen (48, 50) wenigstens teilweise von Statorwicklungen zusammengehalten werden.

9. Ein Kühlmantel gemäß einem der vorherigen Ansprüche, ferner umfassend eine Vielzahl an Rippen (56,76), welche sich über den Umfang des Stators hinaus erstrecken.

10. Ein Kühlmantel gemäß Anspruch 9, wobei die Rippen (56, 76) als Wärmesenken für Statorwicklungen (24) dienen und/oder Schlitze definieren, welche Statorwicklungen aufnehmen.

11. Eine Axialfluss-rotierende-elektrische-Maschine, umfassend:
einen Stator (10); und
einen Kühlmantel (22) gemäß einem der vorherigen Ansprüche innerhalb des Stators (10).

12. Eine Axialflussmaschine gemäß Anspruch 11, wobei der Stator aus zwei Teilen (18, 20) geformt ist und der Kühlmantel (22) zwischen den beiden eingebettet ist.

13. Eine Axialfluss-rotierende-elektrische-Maschine gemäß Anspruch 12, ferner umfassend:
ein Maschinengehäuse (118); und
ein Einlassrohr (190) und ein Auslassrohr zum Bereitstellen von Kühlmittel an und von dem Kühlmantel,
wobei das Einlassrohr und das Auslassrohr in dem Maschinengehäuse integriert sind.

14. Ein Verfahren zum Kühlen des Stators (10) einer Axialfluss-rotierenden-elektrischen-Maschine, das Verfahren umfassend:
Zirkulieren eines Kühlmittels durch einen Kühlmantel (22) innerhalb des Stators, wobei der Kühlmantel einen Durchgang für den Fluss an Kühlmittel umfasst,
**dadurch gekennzeichnet, dass**:
der Durchgang Nuten (114, 116, 118, 120) umfasst, welche Turbulenzen in den Fluss an Kühlmittel einführen; und
die Nuten (114, 116, 118, 120) verschiedene Mengen an Turbulenz in verschiedenen Teilen des Durchgangs einführen, wobei Nuten (114, 118), die im Wesentlichen parallel zu dem Fluss an Kühlmittel verlaufen, in einem ersten Teil des Kühlmantels vorgesehen sind, und Nuten (116, 120), die im Wesentlichen senkrecht zu dem Fluss an Kühlmittel verlaufen, in einem zweiten Teil des Kühlmantels vorgesehen sind, sodass eine steigende Menge an Turbulenz durch den Kühldurchgang in Richtung des Kühlmittelflusses eingeführt wird.

## Revendications

1. Chemise de refroidissement (22) pour un stator (10) d'une machine électrique tournante à flux axial, la chemise de refroidissement (22) étant agencée pour refroidir l'intérieur du stator (10), la chemise de refroidissement comprenant un passage pour l'écoulement de liquide de refroidissement,
**caractérisée en ce que** :
le passage de refroidissement comprend des rainures (114, 116, 118, 120) qui introduisent une turbulence dans l'écoulement de liquide de refroidissement ; et
les rainures (114, 116, 118, 120) sont agencées pour introduire différentes quantités de turbulence dans différentes parties du passage, dans laquelle des rainures (114, 118) s'étendant sensiblement parallèlement à l'écoulement de liquide de refroidissement sont disposées dans une première partie de la chemise de refroidissement, et des rainures (116, 120) s'étendant sensiblement perpendiculairement à l'écoulement de liquide de refroidissement sont disposées dans une seconde partie de la chemise de refroidissement, de sorte qu'une quantité croissante de turbulence soit introduite à travers le passage de refroidissement dans la direction d'écoulement de liquide de refroidissement.

2. Chemise de refroidissement selon la revendication 1, dans laquelle les rainures (114, 116, 118, 120) sont agencées de sorte qu'un niveau similaire de transfert de chaleur soit obtenu partout dans la chemise de refroidissement.

3. Chemise de refroidissement selon la revendication 1 ou 2, dans laquelle certaines rainures s'étendent selon différents angles vers l'écoulement de liquide de refroidissement à partir d'autres rainures.

4. Chemise de refroidissement selon l'une quelconque des revendications précédentes, dans laquelle certaines rainures sont plus rapprochées que d'autres.

5. Chemise de refroidissement selon l'une quelconque des revendications précédentes, dans laquelle la chemise de refroidissement est discoïde.

6. Chemise de refroidissement selon l'une quelconque des revendications précédentes, dans laquelle la chemise de refroidissement est formée de deux sections (48, 50) qui, lorsqu'elles sont pressées l'une contre l'autre, forment une cavité annulaire.

7. Chemise de refroidissement selon la revendication 6, dans laquelle les deux sections (48, 50) sont rendues étanches par au moins un joint torique.

8. Chemise de refroidissement selon la revendication 6 ou 7, dans laquelle les deux sections (48, 50) sont au moins partiellement maintenues ensemble par des enroulements statoriques.

9. Chemise de refroidissement selon l'une quelconque des revendications précédentes, comprenant en outre une pluralité d'ailettes (56, 76) qui s'étendent au-delà de la circonférence du stator.

10. Chemise de refroidissement selon la revendication 9, dans laquelle les ailettes (56, 76) agissent comme des dissipateurs de chaleur pour des enroulements statoriques (24) et/ou définissent des fentes qui reçoivent des enroulements statoriques.

11. Machine électrique tournante à flux axial comprenant :
un stator (10) ; et
une chemise de refroidissement (22) selon l'une quelconque des revendications précédentes à l'intérieur du stator (10).

12. Machine à flux axial selon la revendication 11, dans laquelle le stator est formé de deux parties (18, 20) et la chemise de refroidissement (22) est intercalée entre les deux.

13. Machine électrique tournante à flux axial selon la revendication 12, comprenant en outre :
un boîtier de machine (118) ; et
un tuyau d'admission (190) et un tuyau d'évacuation pour fournir un liquide de refroidissement à et depuis la chemise de refroidissement,
dans laquelle le tuyau d'admission et le tuyau d'évacuation sont intégrés au boîtier de machine.

14. Procédé de refroidissement du stator (10) d'une machine électrique tournante à flux axial, le procédé comprenant :
la circulation d'un liquide de refroidissement à travers une chemise de refroidissement (22) à l'intérieur du stator, la chemise de refroidissement comprenant un passage pour l'écoulement de liquide de refroidissement,
**caractérisé en ce que** :
le passage comprend des rainures (114, 116, 118, 120) qui introduisent une turbulence dans l'écoulement de liquide de refroidissement ; et
les rainures (114, 116, 118, 120) introduisent différentes quantités de turbulence dans différentes parties du passage, dans lequel des rainures (114, 118) s'étendant sensiblement parallèlement à l'écoulement de liquide de refroidissement sont disposées dans une première partie de la chemise de refroidissement, et des rainures (116, 120) s'étendant sensiblement perpendiculairement à l'écoulement de liquide de refroidissement sont disposées dans une seconde partie de la chemise de refroidissement, de sorte qu'une quantité croissante de turbulence soit introduite à travers le passage de refroidissement dans la direction d'écoulement du liquide de refroidissement.
